# EUROPEAN PATENT APPLICATION

(11) **EP 4 296 950 A1**
(43) Date of publication of application: **27.12.2023**
(21) Application number: 23178140.2
(22) Date of filing: 07.06.2023
(51) Int. Cl.: G06T 7/73, G06T 7/80

(54) **SYSTEM FOR INTRINSIC CALIBRATION OF CAMERAS**

(30) Priority: 24.06.2022 US 202263355514 P
(71) Applicant: TuSimple, Inc., San Diego, CA 92122 (US)
(72) Inventor: NING, Juexiao, San Diego, 92122 (US); DENG, Fuheng, San Diego, 92122 (US); GONG, Chenghao, San Diego, 92122 (US)
(74) Representative: Morrall, Jonathan Ian McLachlan

(57) **Abstract**

One aim of autonomous vehicle (AV) technologies is to provide vehicles that can safely navigate towards a destination with limited or no driver assistance. An AV may include multiple cameras mounted on it for several purposes including security purposes, driving aid, or facilitating autonomous driving. Systems, apparatus, and methods are provided to calibrate intrinsic parameters of AV cameras. AV cameras and calibration targets are moved in a systematic, predictable, and repeatable manner for calibration of camera intrinsic parameters.

## Description

### TECHNICAL FIELD

The present disclosure relates generally to autonomous vehicles. More particularly, the present disclosure is related to a system for intrinsic calibration of cameras in autonomous vehicles.

### BACKGROUND

One aim of autonomous vehicle technologies is to provide vehicles that can safely navigate towards a destination with limited or no driver assistance. The safe navigation of an autonomous vehicle (AV) from one point to another may include the ability to signal other vehicles, navigating around other vehicles in shoulders or emergency lanes, changing lanes, biasing appropriately in a lane, and navigate all portions or types of highway lanes. Autonomous vehicle technologies may enable an AV to operate without requiring extensive learning or training by surrounding drivers, by ensuring that the AV can operate safely, in a way that is evident, logical, or familiar to surrounding drivers and pedestrians.

An AV may include multiple cameras mounted on it for several purposes including security purposes, driving aid, or facilitating autonomous driving. Cameras mounted on an AV can obtain images from surrounding areas of the AV. These images can be processed to obtain information about the road or the objects surrounding the AV, which can be further used to safely maneuver the AV through traffic or on a highway.

Images obtained by the cameras mounted on an AV, however, may often be distorted due to inaccuracies in camera intrinsic parameters. Examples of camera intrinsic parameter inaccuracies include focal length inaccuracies, lens center misalignment, imperfect lens shape causing image radial distortion, and/or other camera intrinsic parameter inaccuracies. Thus, an intrinsic calibration is needed to correct the inaccuracies in the intrinsic parameters of the cameras before the cameras are used in AVs. Conventional intrinsic calibration technique consists of mounting cameras on the AV and placing calibration boards around the AV, each board at a different angle. The AVs in conventional calibration systems are placed on rotating platforms in order to capture images of calibration boards at different angles. This approach is time-consuming and expensive. Therefore, prior art solutions for intrinsic camera calibration for AVs are not entirely satisfactory.

### SUMMARY

Images obtained by AV cameras may often be distorted due to inaccuracies in the intrinsic parameters of the cameras. Systems, apparatus, and methods are provided to calibrate intrinsic parameters of multiple cameras in an AV simultaneously before the cameras are mounted on the AV. A calibration target and a camera holding jig are moved in a systematic, predictable, and repeatable manner for intrinsic camera calibration.

In an example embodiment, intrinsic parameter calibration for one or more cameras using one or more calibration targets is performed before the one or more cameras are mounted on an AV. The one or more cameras may be mounted on a camera holding jig mounted on a support frame. The support frame may comprise horizontal and vertical rails used to hold the camera holding jig and facilitate movements of the camera holding jig. In one example, the camera holding jig and the support frame are connected to a processing unit used to control movements of the camera holding jig and the support frame. The support frame may be a linear guide, a linear actuator, a rotary actuator support, and/or any other types of support frames. In some embodiments, the processing unit is configured to send a moving command signal to the camera holding jig such that the camera holding jig moves along a horizontal rail or a vertical rail for a predetermined distance towards a predetermined direction. The camera holding jig may comprise a set of roller bearings configured to reduce coefficient of friction during its movement.

In another embodiment, a total number of desired calibration target images is predetermined for camera intrinsic parameter calibration. In one example, each of the desired calibration target images corresponds to a desired distance from a camera and a desired angle of the calibration target. The camera holding jig and the one or more calibration targets are then moved for a predetermined number of steps, wherein in each step, the camera captures images of the one or more calibration targets corresponding to the desired distances and the desired angels.

In yet another embodiment, intrinsic camera calibration is performed at the processing unit using the captured calibration target images and a reference calibration target image. In one example, intrinsic camera calibration is performed by first identifying a set of calibration control points on the captured calibration target images. The set of calibration control points may be detected using a corner detection operator, an iterative subpixel localization method with a gradient-based search, a maximally stable extremal region method combined with an ellipse fitting method and a nearest neighbors' method. The detected set of calibration control points may be then used to estimate camera intrinsic parameters using an iterative refinement approach by undistorting the captured calibration target images to a canonical image pattern and re-estimating the camera intrinsic parameters in each iteration until convergence is reached.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a schematic diagram of a system including an autonomous vehicle.
FIG. 2 shows a flow diagram for operation of an autonomous vehicle (AV) safely in light of the health and surroundings of the AV.
FIG. 3 illustrates an AV intrinsic camera calibration system, in accordance with an exemplary embodiment of the present disclosure.
FIG. 4A-C illustrate various exemplary calibration targets with different calibration patterns used for AV intrinsic camera calibration, in accordance with the present disclosure.
FIG. 5A-E illustrate various views of an intrinsic camera calibration system, in accordance with the present disclosure.
FIG. 6A-E illustrate various views of a camera holding jig and a support frame, in accordance with the present disclosure.
FIG. 7 illustrates an example method for calibrating camera intrinsic parameters in an AV, according to an embodiment of the present disclosure.
FIG. 8 illustrates another example method for calibrating camera intrinsic parameters in an AV, according to an embodiment of the present disclosure.
FIG. 9 illustrates a simplified computer system that can be used to implement various embodiments described and illustrated in the present disclosure.

### DETAILED DESCRIPTION

The example headings for the various sections below are used to facilitate the understanding of the disclosed subject matter and do not limit the scope of the claimed subject matter in any way. Accordingly, one or more features of one example section can be combined with one or more features of another example section.

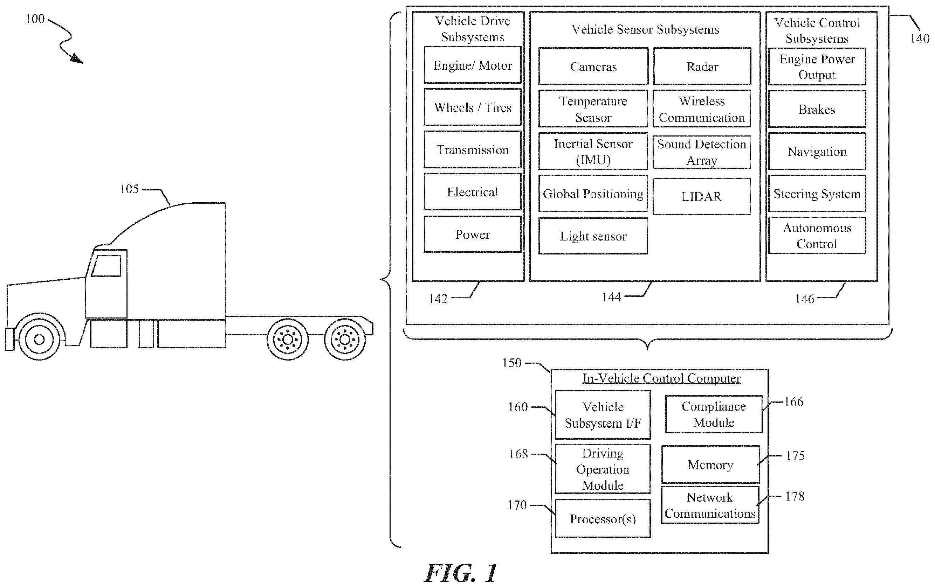

FIG. 1 shows a system 100 that includes an autonomous vehicle 105. An autonomous vehicle may be referred to as a ground vehicle capable of sensing its environment and moving safely with little or no human input. Examples of autonomous vehicles include semi-automated vehicles, autonomous tractor-trailers, autonomous 18 wheelers, autonomous lorries, autonomous class 8 vehicles, autonomous passenger vehicles, autonomous transport vans, autonomous cargo vans, autonomous recreational vehicles, autonomous golf carts, autonomous transport carts, and/or any other types of autonomous vehicles. The autonomous vehicle 105 includes a plurality of vehicle subsystems 140 and an in-vehicle control computer 150. The plurality of vehicle subsystems 140 includes vehicle drive subsystems 142, vehicle sensor subsystems 144, and vehicle control subsystems 146. An engine or motor, wheels and tires, a transmission, an electrical subsystem, and a power subsystem may be included in the vehicle drive subsystems. The engine of the autonomous truck may be an internal combustion engine, a fuel-cell powered electric engine, a battery powered electrical engine, a hybrid engine, or any other type of engine capable of moving the wheels on which the autonomous vehicle 105 moves. The autonomous vehicle 105 may have multiple motors or actuators to drive the wheels of the vehicle, such that the vehicle drive subsystems 142 include two or more electrically driven motors. The transmission may include a continuous variable transmission or a set number of gears that translate the power created by the engine into a force that drives the wheels of the vehicle. The vehicle drive subsystems may include an electrical system that monitors and controls the distribution of electrical current to components within the system, including pumps, fans, and actuators. The power subsystem of the vehicle drive subsystem may include components that regulate the power source of the vehicle.

Vehicle sensor subsystems 144 can include sensors for general operation of the autonomous vehicle 105, including those which would indicate a malfunction in the AV or another cause for an AV to perform a limited or minimal risk condition (MRC) maneuver. The sensors for general operation of the autonomous vehicle may include cameras, a temperature sensor, an inertial sensor (IMU), a global positioning system, a light sensor, a LIDAR system, a radar system, and wireless communications.

A sound detection array, such as a microphone or array of microphones, may be included in the vehicle sensor subsystem 144. The microphones of the sound detection array are configured to receive audio indications of the presence of, or instructions from, authorities, including sirens and command such as "Pull over." These microphones are mounted, or located, on the external portion of the vehicle, specifically on the outside of the tractor portion of an autonomous vehicle 105. Microphones used may be any suitable type, mounted such that they are effective both when the autonomous vehicle 105 is at rest, as well as when it is moving at normal driving speeds.

Cameras included in the vehicle sensor subsystems 144 may be rear-facing so that flashing lights from emergency vehicles may be observed from all around the autonomous vehicle 105. These cameras may include video cameras, cameras with filters for specific wavelengths, as well as any other cameras suitable to detect emergency vehicle lights based on color, flashing, of both color and flashing.

The vehicle control subsystem 146 may be configured to control operation of the autonomous vehicle 105 and its components. Accordingly, the vehicle control subsystem 146 may include various elements such as an engine power output subsystem, a brake unit, a navigation unit, a steering system, and an autonomous control unit. The engine power output may control the operation of the engine, including the torque produced or horsepower provided, as well as provide control of the gear selection of the transmission. The brake unit can include any combination of mechanisms configured to decelerate the autonomous vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS device and one or more predetermined maps so as to determine the driving path for the autonomous vehicle 105. The steering system may represent any combination of mechanisms that may be operable to adjust the heading of the autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS device, the RADAR, the LiDAR (i.e. LIDAR), the cameras, and/or other vehicle subsystems to determine the driving path or trajectory for the autonomous vehicle 105. The autonomous control that may activate systems that the autonomous vehicle 105 has which are not present in a conventional vehicle, including those systems which can allow an autonomous vehicle to communicate with surrounding drivers or signal surrounding vehicles or drivers for safe operation of the autonomous vehicle.

An in-vehicle control computer 150, which may be referred to as a VCU, includes a vehicle subsystem interface 160, a driving operation module 168, one or more processors 170, a compliance module 166, a memory 175, and a network communications subsystem 178. This in-vehicle control computer 150 controls many, if not all, of the operations of the autonomous vehicle 105 in response to information from the various vehicle subsystems 140. The one or more processors 170 execute the operations that allow the system to determine the health of the autonomous vehicle, such as whether the autonomous vehicle has a malfunction or has encountered a situation requiring service or a deviation from normal operation and giving instructions. Data from the vehicle sensor subsystems 144 is provided to VCU 150 so that the determination of the status of the autonomous vehicle can be made. The compliance module 166 determines what action should be taken by the autonomous vehicle 105 to operate according to the applicable (i.e. local) regulations. Data from other vehicle sensor subsystems 144 may be provided to the compliance module 166 so that the best course of action in light of the AV's status may be appropriately determined and performed. Alternatively, or additionally, the compliance module 166 may determine the course of action in conjunction with another operational or control module, such as the driving operation module 168.

The memory 175 may contain additional instructions as well, including instructions to transmit data to, receive data from, interact with, or control one or more of the vehicle drive subsystem 142, the vehicle sensor subsystem 144, and the vehicle control subsystem 146 including the autonomous Control system. The in-vehicle control computer (VCU) 150 may control the function of the autonomous vehicle 105 based on inputs received from various vehicle subsystems (e.g., the vehicle drive subsystem 142, the vehicle sensor subsystem 144, and the vehicle control subsystem 146). Additionally, the VCU 150 may send information to the vehicle control subsystems 146 to direct the trajectory, velocity, signaling behaviors, and the like, of the autonomous vehicle 105. The autonomous control vehicle control subsystem may receive a course of action to be taken from the compliance module 166 of the VCU 150 and consequently relay instructions to other subsystems to execute the course of action.

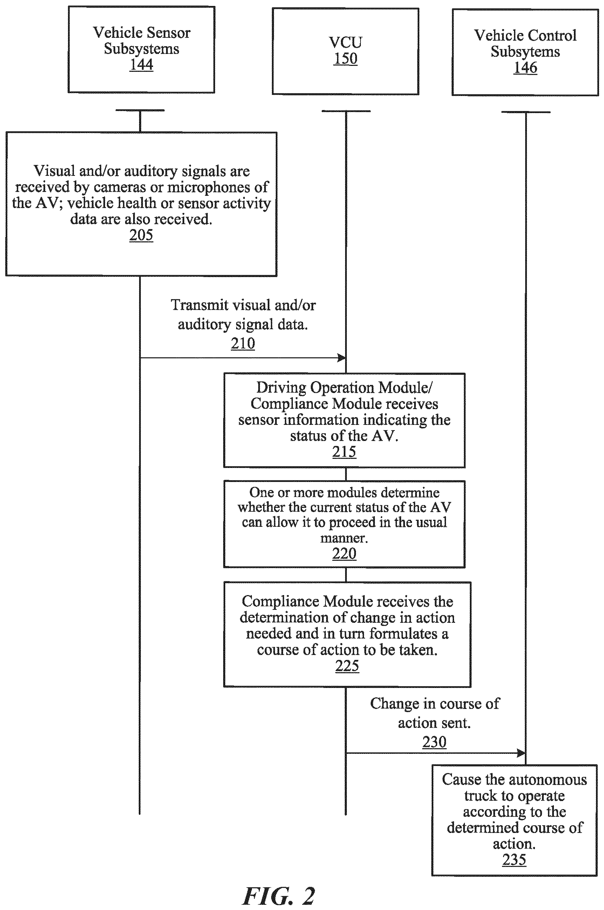

FIG. 2 shows a flow diagram for operation of an autonomous vehicle (AV) safely in light of the health and surroundings of the AV. Although this figure depicts functional steps in a particular order for purposes of illustration, the process is not limited to any particular order or arrangement of steps. One skilled in the relevant art will appreciate that the various steps portrayed in this figure could be omitted, rearranged, combined and/or adapted in various ways.

As shown in FIG. 2, the vehicle sensor subsystem 144 receives visual, auditory, or both visual and auditory signals indicating the at the environmental condition of the AV, as well as vehicle health or sensor activity data are received in step 205. These visual and/or auditory signal data are transmitted from the vehicle sensor subsystem 144 to the in-vehicle control computer system (VCU) 150, as in step 210. Any of the driving operation module and the compliance module receive the data transmitted from the vehicle sensor subsystem, in step 215. Then, one or both of those modules determine whether the current status of the AV can allow it to proceed in the usual manner or that the AV needs to alter its course to prevent damage or injury or to allow for service in step 220. The information indicating that a change to the course of the AV is needed may include an indicator of sensor malfunction; an indicator of a malfunction in the engine, brakes, or other components necessary for the operation of the autonomous vehicle; a determination of a visual instruction from authorities such as flares, cones, or signage; a determination of authority personnel present on the roadway; a determination of a law enforcement vehicle on the roadway approaching the autonomous vehicle, including from which direction; and a determination of a law enforcement or first responder vehicle moving away from or on a separate roadway from the autonomous vehicle. This information indicating that a change to the AV's course of action is needed may be used by the compliance module to formulate a new course of action to be taken which accounts for the AV's health and surroundings, in step 225. The course of action to be taken may include slowing, stopping, moving into a shoulder, changing route, changing lane while staying on the same general route, and the like. The course of action to be taken may include initiating communications with any oversight or human interaction systems present on the autonomous vehicle. The course of action to be taken may then be transmitted from the VCU 150 to the autonomous control system, in step 230. The vehicle control subsystems 146 then cause the autonomous vehicle 105 to operate in accordance with the course of action to be taken that was received from the VCU 150 in step 235.

It should be understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

### Intrinsic Camera Calibration System

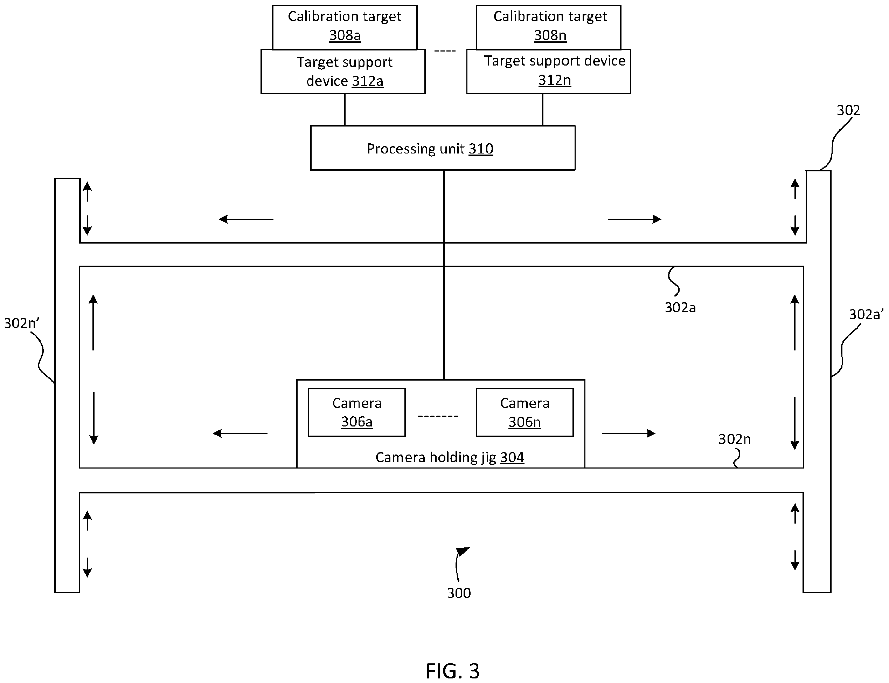

FIG. 3 illustrates an AV intrinsic camera calibration system 300, in accordance with an exemplary embodiment of the present disclosure. The AV intrinsic camera calibration system 300 may include a support frame 302, a camera holding jig 304, one or more cameras 306a-n mounted on the camera holding jig 304, one or more calibration targets 308a-n mounted on one or more target support devices 312a-n, and a processing unit 310. The processing unit 310 may be operatively connected to the camera holding jig 304, the one or more cameras 306a-n, and the one or more target support devices 312a-n for controlling and processing calibration of one or more intrinsic parameters in the one or more cameras 306a-n. Communication between the processing unit 310 and the camera holding jig 304, the one or more cameras 306a-n, and the one or more target support devices 312a-n may be performed by wired or wireless communication channels.

The support frame 302 may be referred to as a support device used to carry loads and ensure stable motion. Examples of a support frame 302 include linear guide support, linear actuator support, rotary actuator support, and/or any other types of support frames. In some embodiment, the support frame 302 comprises one or more horizontal rails 302a-n and one or more vertical rails 302a'-n' for supporting and guiding movements of the camera holding jig 304. In one example, the processing unit 310 is configured to send a moving command signal to the camera holding jig 304 such that the camera holding jig 304 moves along the one or more horizontal rails 302a-n or the one or more vertical rails 302a'-n' for a predetermined distance towards a predetermined direction. In another example, the camera holding jig 304 is configured to slide over the one or more horizontal rails 302a-n or the one or more vertical rails 302a'-n' with the aid of a lubricant. In yet another example, the camera holding jig 304 comprises a set of roller bearings configured to reduce the coefficient of friction between the camera holding jig 304 and the one or more horizontal rails 302a-n or the one or more vertical rails 302a'-n'. In this way, a force required to move the camera holding jig 304 can be reduced. In still another example, the one or more horizontal rails 302a-n and the one or more vertical rails 302a'-n' comprise a set of grooves for the set of roller bearings to move along either on the outside or on the inside of the one or more horizontal rails 302a-n and the one or more vertical rails 302a'-n'.

The camera holding jig 304 may be referred to as a device configured to hold one or more cameras to control the location and/or motion of the cameras. In one example, the camera holding jig 304 comprises a set of camera holders, each of which is configured to hold one camera. In another example, the camera holding jig 304 is configured to receive/obtain a moving command signal from the processing unit 310 such that the camera holding jig 304 moves along the one or more horizontal rails 302a-n or the one or more vertical rails 302a'-n' according to a camera calibration scheme.

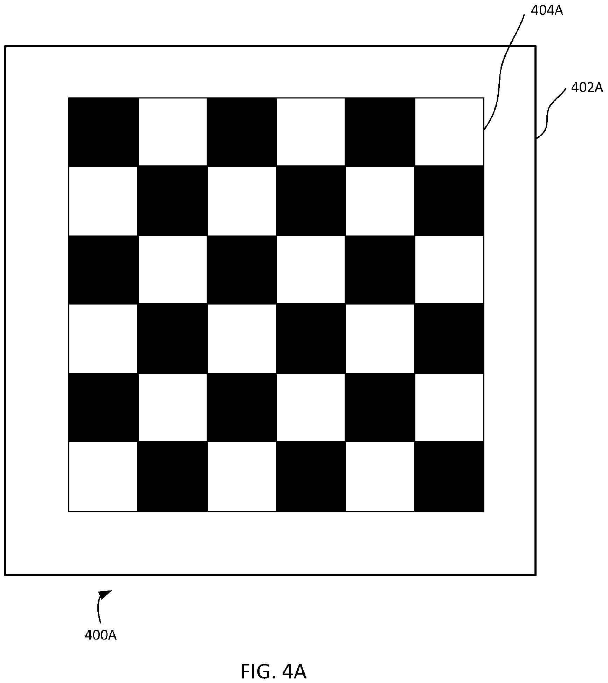

The one or more calibration targets 308a-n may be referred to as a board comprising one or more predetermined calibration image patterns used to calibrate cameras. FIG. 4A-C illustrate various exemplary calibration targets with different calibration patterns used for AV intrinsic camera calibration. FIG. 4A illustrates an example of a calibration target 400A according to an embodiment of the present disclosure. As can be seen, the calibration target 400A comprises a substrate 402A with a checkerboard pattern 404A printed, stamped, engraved, imprinted, or otherwise marked thereon. The substrate 402A may be paper, cardboard, plastic, metal, foam, or some combination thereof. The substrate 402A may in some cases include a translucent or transparent surface upon which the checkerboard pattern 404A is printed, and which a light source may provide illumination through. The substrate 402A may in some cases include a retroreflective surface upon which the checkerboard pattern 404A is printed. The retroreflective property of the surface may be inherent to the material of the substrate 402A or may be a separate layer applied to the surface of the substrate 402A, for example by adhering a retroreflective material to the substrate 402A or by painting (e.g., via a brush, roller, or aerosol spray) the substrate 402A with a retroreflective paint.

The calibration target 400A is useful for calibration of cameras in an AV, or other sensors that capture visual data. In particular, the one or more cameras 306a-n with a pattern/image/feature recognition system running on the processing unit 310 can identify points representing vertices between the dark (black) and light (white) checkers on the checkerboard pattern 404A. By drawing lines connecting these points, the one or more cameras 306a-n and the processing unit 310 can generate a grid. In some embodiments, the one or more cameras 306a-n have a wide-angle lens, such as a fisheye lens or a barrel lens. As a result, the resulting grid becomes warped so that some checkers will appear curved rather than straight, and so that checkers near the edges of the one or more cameras 306a-n's point of view will appear more squashed, while checkers near the center of the one or more cameras 306a-n's point of view will appear larger and more even. On the other hand, a rectilinear lens provides an opposite effect.

In some embodiments, the processing unit 310 is configured to identify distortions of camera lens in the one or more cameras 306a-n and counteract the distortions based on a comparison between a reference checkerboard pattern and a captured checkerboard pattern by the one or more cameras 306a-n. The one or more cameras 306a-n and the processing unit 310 may be configured to identify other parameters of the one or more cameras 306a-n in similar fashion, such as any lens color to be filtered out, any crack or defect in the lens to be filtered out, or a combination thereof.

The calibration target 400A may also be configured to calibrate other types of sensors used in an AV, such as LIDAR, ultrasonic sensors, or radar sensors, given that the shape of the substrate 402A can be detected by these sensors. For example, flat planar vision targets such as the calibration target 400A can be detected by LIDAR by relying on planar geometry estimates and using the returned intensity. While FIG. 4A illustrates a square or rectangular substrate 402A, the substrate 402A may be circular, semicircular, ellipsoidal, triangular, quadrilateral, (trapezoid, parallelogram), pentagonal, hexagonal, heptagonal, octagonal, nonagonal, decagonal, otherwise polygonal, or some combination thereof.

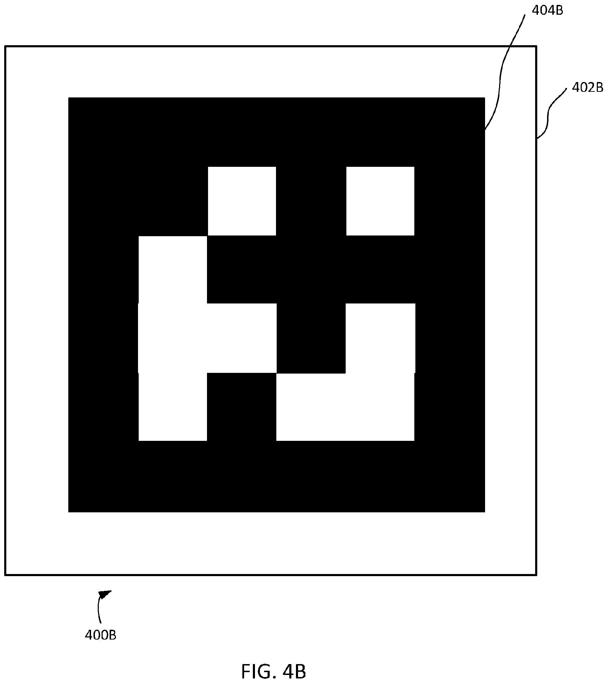

FIG. 4B illustrates an example of a calibration target 400B according to an embodiment of the present disclosure. As can be seen, the calibration target 400B comprises a substrate 402B with an ArUco (Augmented Reality University of Cordoba) pattern 404B printed, stamped, engraved, imprinted, or otherwise marked thereon. The ArUco pattern 404B may be referred to as a synthetic square marker pattern composed by a wide black border and an inner binary matrix which determines its identifier. For example, each square in the inner binary matrix in FIG. 4B is dark/black or light/white used to determine the identifier of the ArUco pattern 404B. The black border may be used to facilitate fast detection of the ArUco pattern 404B, and the binary codification may be used to identify the ArUco pattern 404B and apply error detection and correction techniques.

By detecting the pattern in the ArUco pattern 404B, the one or more cameras 306a-n and the processing unit 310 may identify a grid, similarly to the checkerboard pattern 404A, though potentially with fewer points, as some areas of the ArUco pattern 404B may include contiguous dark/black squares or contiguous light/white squares. By identifying the grid from the calibration target 400B captured by the one or more cameras 306a-n (e.g. with lens distortion such as parabolic distortion), and comparing it to a known reference image of the ArUco pattern (e.g. without any distortion), any distortions or other differences may be identified, and appropriate corrections may be applied to counteract these distortions or other differences. Please reference FIG. 4A and its associated texts for structure and functions of other components included in this example.

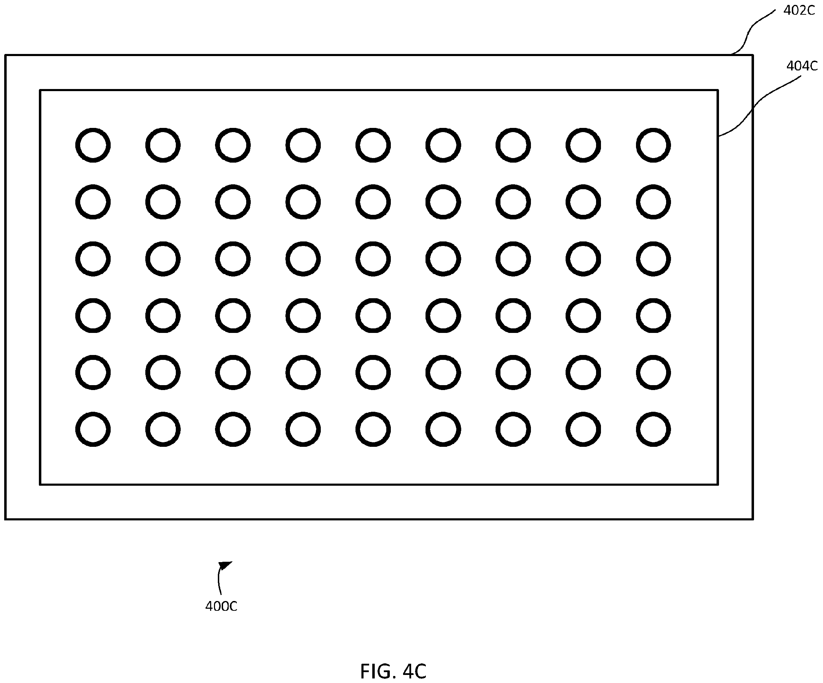

FIG. 4C illustrates an example of a calibration target 400C according to an embodiment of the present disclosure. As can be seen, the calibration target 400C comprises a substrate 402C with a ring pattern 404C printed, stamped, engraved, imprinted, or otherwise marked thereon. The ring pattern 404C may include a set of dark/black ring shapes on a white background.

The one or more cameras 306a-n and the processing unit 310 may be configured to identify ring patterns from the calibration target 400C captured by the one or more cameras 306a-n (e.g. with lens distortion such as parabolic distortion), and comparing the identified ring patterns to a known reference image of the ring patterns (e.g. without any distortion). Based on the comparison, any distortions or other differences may be identified, and appropriate corrections may be applied to counteract these distortions or other differences. Please reference FIG. 4A and its associated texts for structure and functions of other components included in this example.

While the only patterns 404A-C discussed with respect to calibration target 400 are checkerboard pattern 404A, ArUco pattern 404B, and ring pattern 404C, other patterns that are not depicted can additionally or alternatively be used. For example, bar codes or quick response (QR) codes may be used as patterns that can be recognized using the one or more cameras 306an and the processing unit 310 during camera calibration.

Referring back to FIG. 3, the one or more target support devices 310a-n may be operatively connected to the processing unit 310 to receive/obtain a calibration target moving command to move the one or more calibration targets 308a-n for a predetermined distance towards a predetermined direction. The one or more target support devices 310a-n may be referred to as a device configured to hold the one or more calibration targets 308a-n and move the one or more calibration targets 308a-n to a desired distance at a desired angle based on a control signal. In some embodiments, the one or more target support devices 310a-n are electric carts with target holders and one or more wheels. In one example, the processing unit 310 sends a calibration target moving command signal (for example moving towards a north direction for 3 feet) to the one or more target support devices 31 0a-n. Upon receiving the calibration target moving command signal, one or more motors in the one or more target support devices 310a-n may be configured to create desired movements of the one or more target support devices 310an. In another example, the one or more target support devices 31 0a-n are moved manually towards a desired direction for a desired distance.

A processing unit 310 may be referred to an electronic circuitry configured to execute computer instructions to perform one or more specific tasks. Examples of a processing unit 310 include central processing unit, application-specific integrated circuit, and/or any other types of processing unit. In some embodiments, the processing unit 310 is configured to perform an intrinsic camera calibration process by sending moving command signals to the one or more target support devices 312a-n and the camera holding jig 302, receiving captured images from the one or more cameras 306a-n, and processing calibration algorithms.

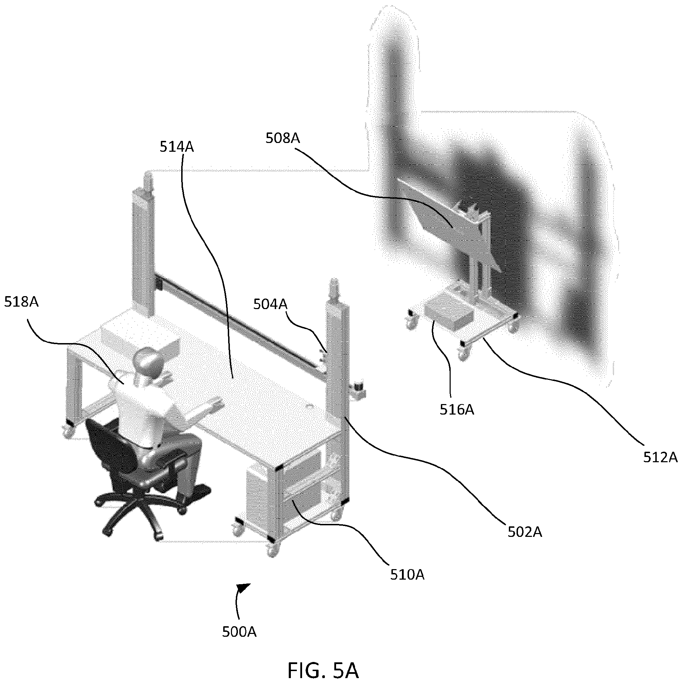

FIG. 5A-E illustrate various views of an intrinsic camera calibration system, according to some embodiments of the present disclosure. FIG. 5A illustrates a rear perspective view of an intrinsic camera calibration system 500A, according to an embodiment of the present disclosure. As shown, an operator 518A may control a processing unit 510A installed in a processing station 514A to move a camera holding jig 504A mounted on a support frame 502A. The camera holding jig 504A may be configured to hold one or more cameras used for intrinsic camera calibration. A calibration target 508A may be mounted on a target support device 512A with a set of wheels and a target holder for controlling movements of the calibration target 508A. In one example, the target support device 512A comprises a transceiver 516A to receive/obtain a moving command signal from the processing unit 510A such that the target support device 512A moves towards a predetermined direction for a predetermined distance. In another example, the operator 518A may manually move the target support device 512A based on a camera calibration flow.

In some embodiments, the processing unit 510A sends a moving command signal to the camera holding jig 504A such that the camera holding jig 504A moves along either a horizontal rail or a vertical rail of the support frame 502A towards a predetermined direction for a predetermined distance. In one example, the processing unit 510A sends a moving command signal to the camera holding jig 504A according to a specific camera calibration flow. In another example, the camera holding jig 504A starts to move along a horizontal rail of the support frame 502A upon receiving a moving signal from the processing unit 510A. When the camera holding jig 504A reaches an end of the horizontal rail of the support frame 502A, the camera holding jig 504A may be configured to start moving along a vertical rail of the support frame 502A, wherein the vertical rail is attached to the horizontal rail. In still another example, the camera holding jig 504A starts to move along a vertical rail of the support frame 502A upon receiving a moving signal from the processing unit 510A. When the camera holding jig 504A reaches an end of the vertical rail of the support frame 502A, the camera holding jig 504A may be configured to start moving along a horizontal rail of the support frame 502A, wherein the horizontal rail is attached to the vertical rail.

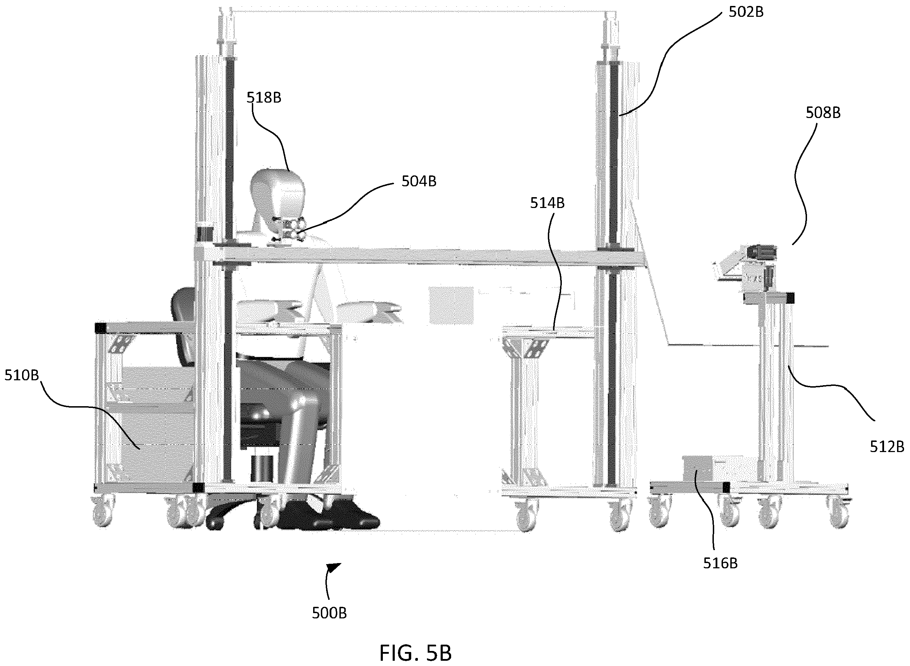

FIG. 5B illustrates a front perspective view of an intrinsic camera calibration system 500B, according to an embodiment of the present disclosure. As shown, an operator 518B may control a processing unit 510B installed in a processing station 514B to move a camera holding jig 504B mounted on a support frame 502B. The camera holding jig 504B may be configured to hold one or more cameras used for intrinsic camera calibration. A calibration target 508B may be mounted on a target support device 512B with a set of wheels and a calibration target holder for controlling movements of the calibration target 508B. The target support device 512B may comprise a transceiver 516B to receive/obtain a moving command signal from the processing unit 510B. Please reference FIG. 5A and its associated texts for structure and functions of other components included in this example.

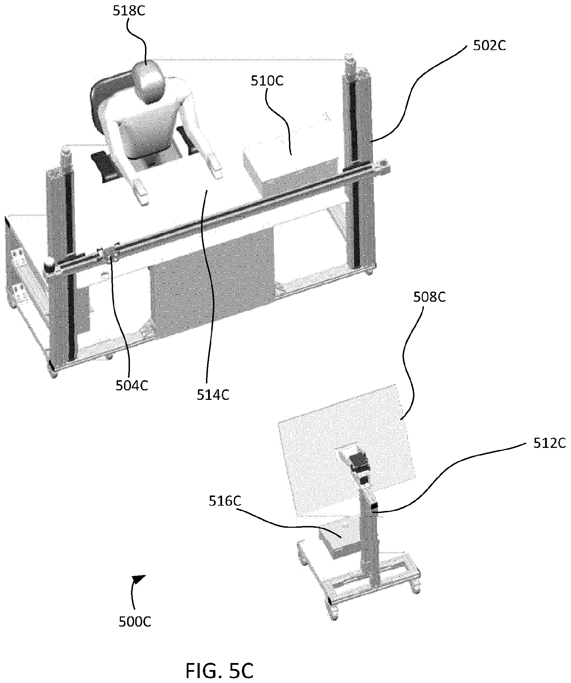

FIG. 5C illustrates a top perspective view of an intrinsic camera calibration system 500C, according to an embodiment of the present disclosure. As shown, an operator 518C may control a processing unit 510C installed on a processing station 514C to move a camera holding jig 504C mounted on a support frame 502C. The camera holding jig 504C may be configured to hold one or more cameras used for intrinsic camera calibration. A calibration target 508C may be mounted on a target support device 512C with a set of wheels and a calibration target holder for controlling movements of the calibration target 508C. The target support device 512C may comprise a transceiver 516C to receive/obtain a moving command signal from the processing unit 510C. Please reference FIG. 5A and its associated texts for structure and functions of other components included in this example.

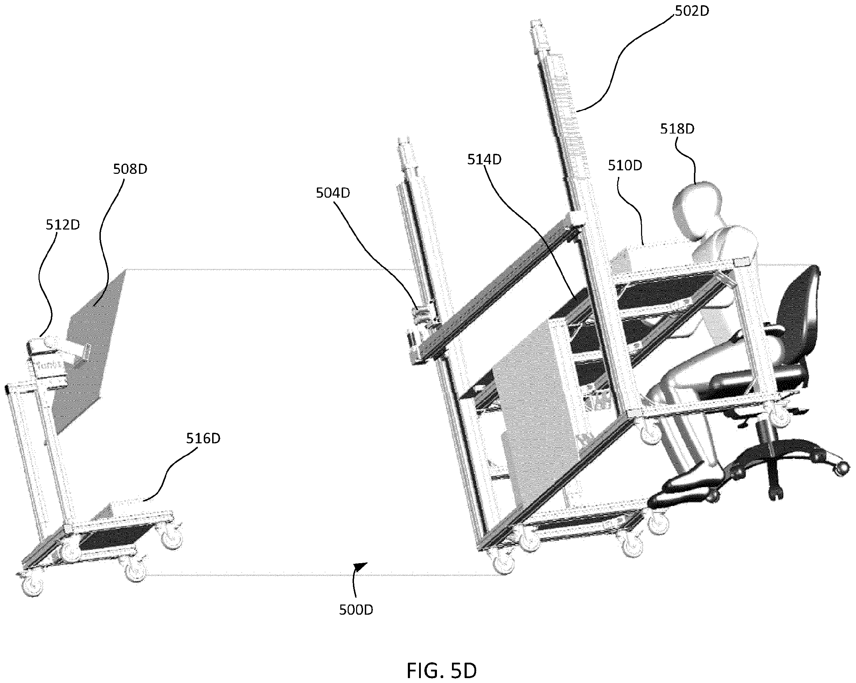

FIG. 5D illustrates a bottom perspective view of an intrinsic camera calibration system 500D, according to an embodiment of the present disclosure. As shown, an operator 518D may control a processing unit 510D installed on a processing station 514D to move a camera holding jig 504D mounted on a support frame 502D. The camera holding jig 504D may be configured to hold one or more cameras used for intrinsic camera calibration. A calibration target 508D may be mounted on a target support device 512D with a set of wheels and a calibration target holder for controlling movements of the calibration target 508D. The target support device 512D may comprise a transceiver 516D to receive/obtain a moving command signal from the processing unit 510D. Please reference FIG. 5A and its associated texts for structure and functions of other components included in this example.

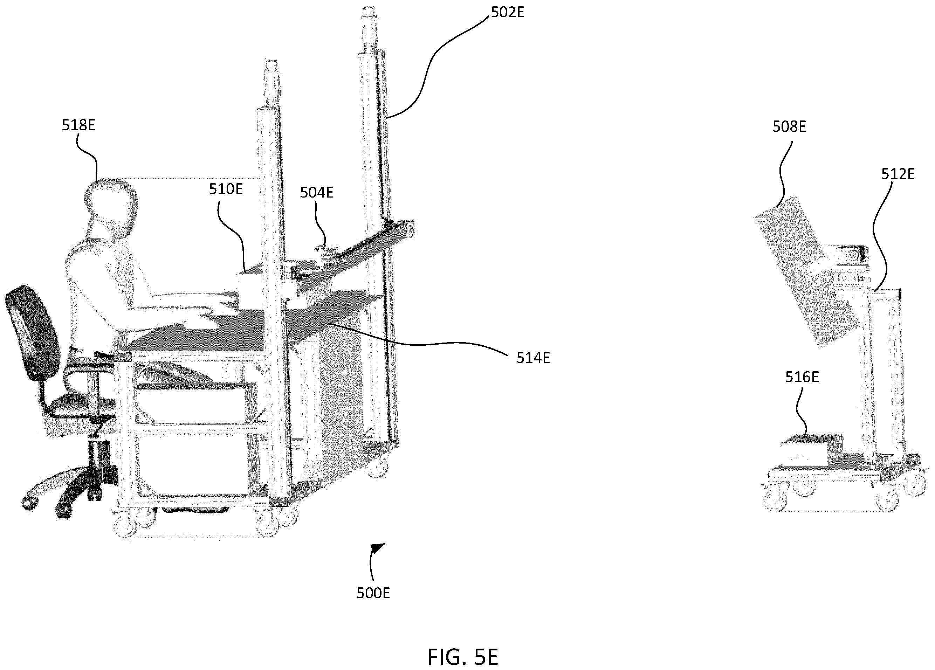

FIG. 5E illustrates a side perspective view of an intrinsic camera calibration system 500E, according to an embodiment of the present disclosure. As shown, an operator 518E may control a processing unit 510E installed on a processing station 514E to move a camera holding jig 504E mounted on a support frame 502E. The camera holding jig 504E may be configured to hold one or more cameras used for intrinsic camera calibration. A calibration target 508E may be mounted on a target support device 512E with a set of wheels and a calibration target holder for controlling movements of the calibration target 508E. The target support device 512E may comprise a transceiver 516E to receive/obtain a moving command signal from the processing unit 510E. Please reference FIG. 5A and its associated texts for structure and functions of other components included in this example.

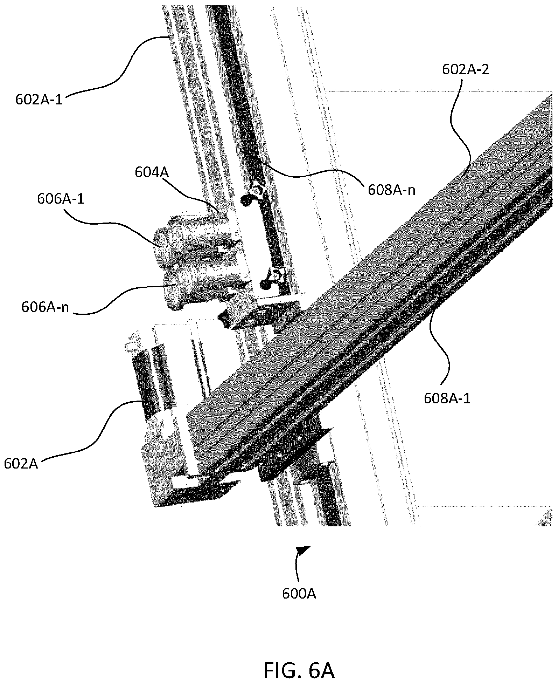

FIG. 6A illustrates an example of a perspective view of a camera holding jig 604A mounted on a support frame 602A, according to an embodiment of the present disclosure. As shown, in this example, the support frame 602A is a linear guide support frame that allows the camera holding jig 604A to move either vertically along a vertical rail 602A-1, or horizontally along a horizontal rail 602A-2. In one example, the camera holding jig 604A is configured to slide over the vertical rail 602A-1 or the horizontal rail 602A-2 with the aid of a lubricant. In another example, the vertical rail 602A-1 and the horizontal rail 602A-2 comprise a set of grooves 608A-1 to 608A-n used to hold the camera holding jig 604A and facilitate movements of the camera holding jig 604A.

In some embodiments, the camera holding jig 604A is configured to hold a set of cameras 606A-1 to 606A-n for calibration. The camera holding jig 604A may be configured to receive/obtain a moving command signal from a processing unit (not shown) such that the camera holding jig 604A moves along either the vertical rail 602A-1 or the horizontal rail 602A-2 according to a camera calibration scheme.

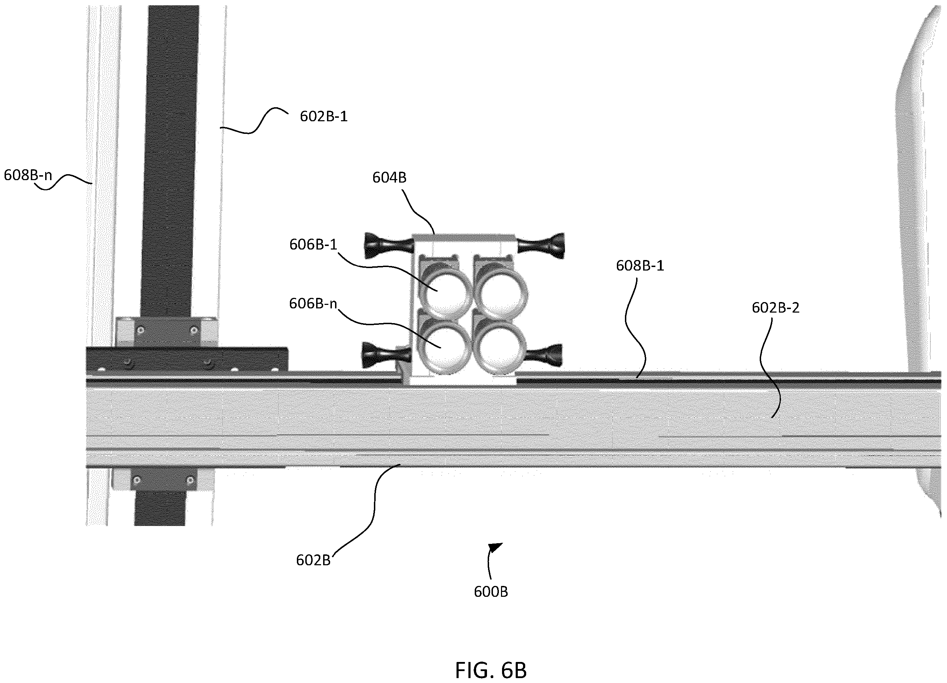

FIG. 6B illustrates another exemplary perspective view of a camera holding jig 604B mounted on a support frame 602B, according to an embodiment of the present disclosure. As shown, in this example, the support frame 602B is a linear guide support frame that allows the camera holding jig 604B to move either vertically along a vertical rail 602B-1, or horizontally along a horizontal rail 602B-2. In some embodiments, the vertical rail 602B-1 and the horizontal rail 602B-2 comprise a set of grooves 608B-1 to 608B-n used to hold the camera holding jig 604B and facilitate movements of the camera holding jig 604B. The camera holding jig 604B may be configured to hold a set of cameras 606B-1 to 606B-n for calibration. In one example, the camera holding jig 604B is coupled to the horizontal rail 602B-2 and is configured to move along the horizontal rail 602B-2. When the camera holding jig 604B arrives at an intersection between the horizontal rail 602B-2 and the vertical rail 602B-1, the camera holding jig 604B may be decoupled from the horizontal rail 602B-2 and coupled to the vertical rail 602B-1 such that the camera holding jig 604B can now move along the vertical rail 602B-1. Please reference FIG. 6A and its associated texts for structure and functions of other components included in this example.

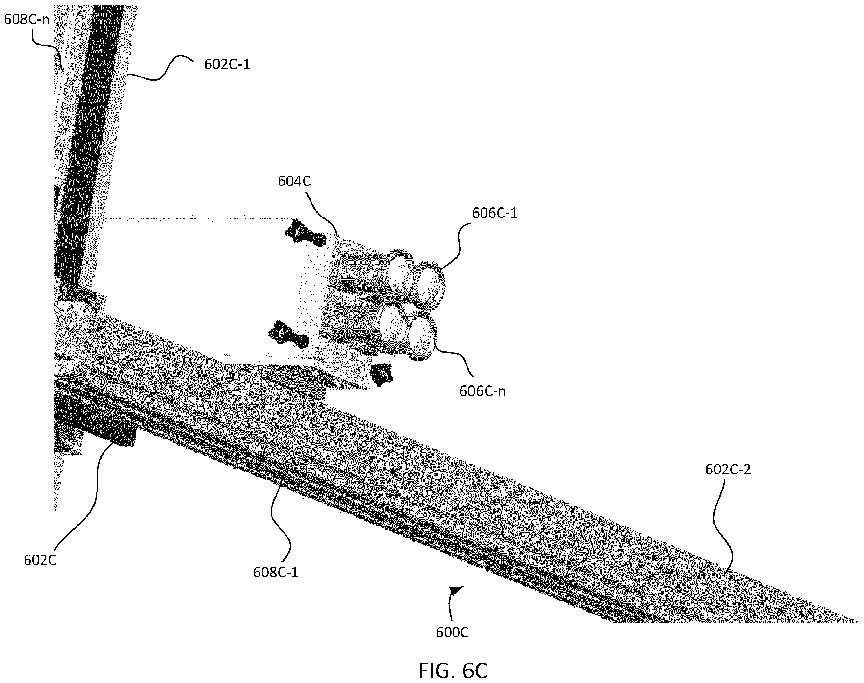

FIG. 6C illustrates still another example of a perspective view of a camera holding jig 604C mounted on a support frame 602C, according to an embodiment of the present disclosure. As shown, in this example, the support frame 602C is a linear guide support frame that allows the camera holding jig 604C to move either vertically along a vertical rail 602C-1, or horizontally along a horizontal rail 602C-2. In some embodiments, the vertical rail 602C-1 and the horizontal rail 602C-2 comprise a set of grooves 608C-1 to 608C-n used to hold the camera holding jig 604C and facilitate movements of the camera holding jig 604C. The camera holding jig 604C may be configured to hold a set of cameras 606C-1 to 606C-n for calibration. Please reference FIG. 6A and its associated texts for structure and functions of other components included in this example.

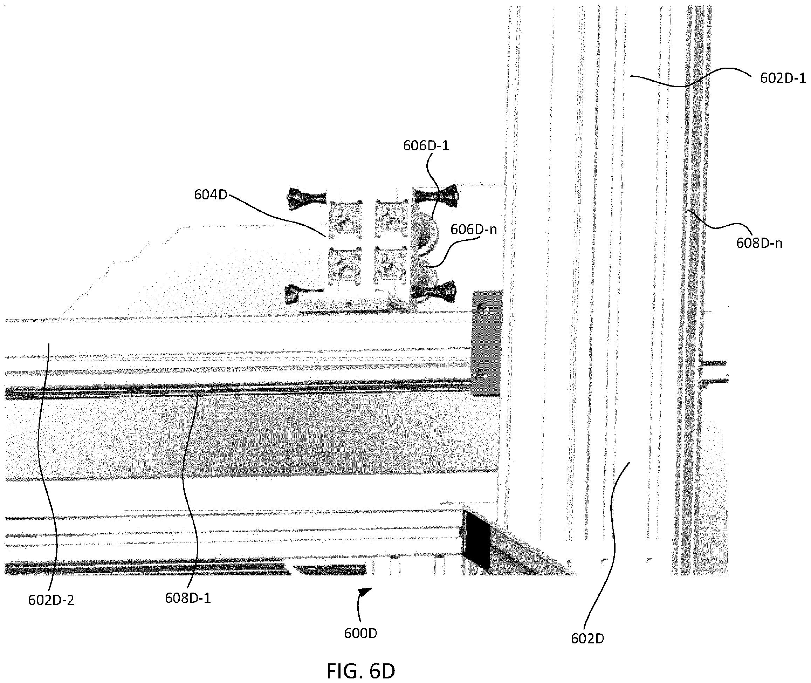

FIG. 6D illustrates still another exemplary perspective view of a camera holding jig 604D mounted on a support frame 602D, according to an embodiment of the present disclosure. As shown, in this example, the support frame 602D is a linear guide support frame that allows the camera holding jig 604D to move either vertically along a vertical rail 602D-1, or horizontally along a horizontal rail 602D-2. In some embodiments, the vertical rail 602D-1 and the horizontal rail 602D-2 comprise a set of grooves 608D-1 to 608D-n used to hold the camera holding jig 604D and facilitate movements of the camera holding jig 604D. The camera holding jig 604D may be configured to hold a set of cameras 606D-1 to 606D-n for calibration. Please reference FIG. 6A and its associated texts for structure and functions of other components included in this example.

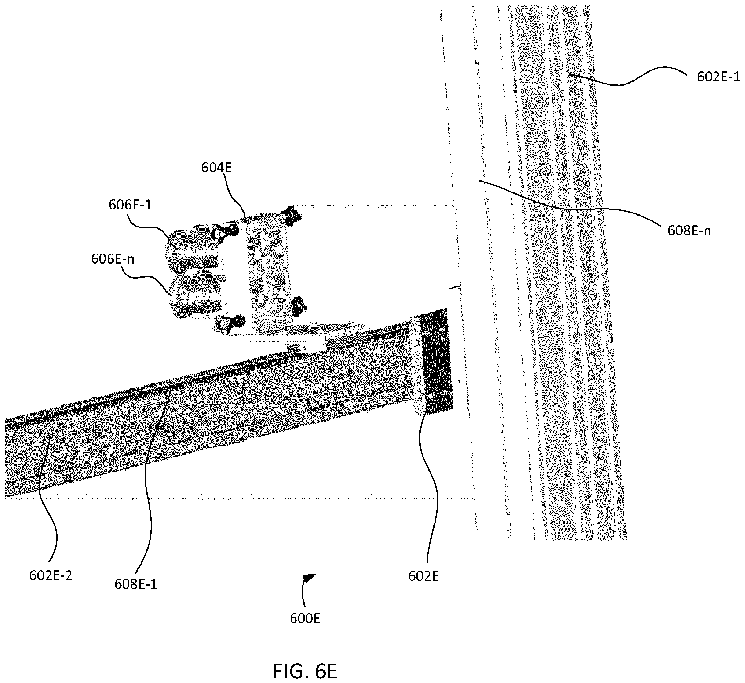

FIG. 6E illustrates still another exemplary perspective view of a camera holding jig 604E mounted on a support frame 602E, according to an embodiment of the present disclosure. As shown, in this example, the support frame 602E is a linear guide support frame that allows the camera holding jig 604E to move either vertically along a vertical rail 602E-1, or horizontally along a horizontal rail 602E-2. In some embodiments, the vertical rail 602E-1 and the horizontal rail 602E-2 comprise a set of grooves 608E-1 to 608E-n used to hold the camera holding jig 604E and facilitate movements of the camera holding jig 604E. The camera holding jig 604E may be configured to hold a set of cameras 606E-1 to 606E-n for calibration. Please reference FIG. 6A and its associated texts for structure and functions of other components included in this example.

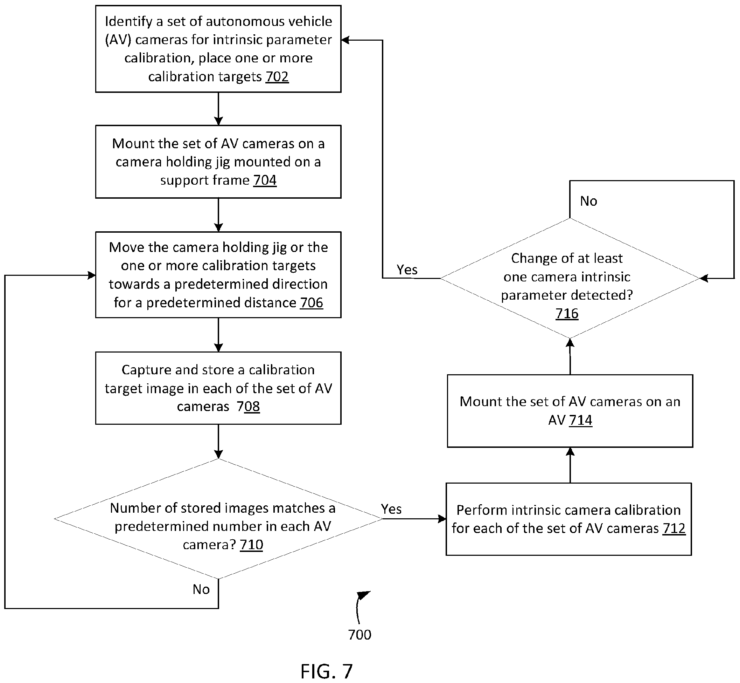

FIG. 7 illustrates an example method 700 for calibrating camera intrinsic parameters in an AV, according to an embodiment of the present disclosure. The operations of method 700 presented below are intended to be illustrative. In some embodiments, method 700 may be accomplished with one or more additional operations not described and/or without one or more of the operations discussed. Additionally, the order in which the operations of method 700 are illustrated in FIG. 7 and described below is not intended to be limiting.

At step 702, a set of AV cameras for intrinsic parameter calibration is identified and one or more calibration targets are placed. In some embodiments, the one or more calibration targets comprise at least a checkerboard pattern, at least an ArUco pattern, or at least a ring pattern used for calibration. In one example, the one or more calibration targets are mounted on one or more target support devices for guiding movements of the one or more calibration targets.

At step 704, the set of AV cameras are mounted on a camera holding jig used for guiding movements of the set of AV cameras. In some embodiments, the camera holding jig is mounted on a support frame comprising a set of horizontal rails and a set of vertical rails for guiding movements of the camera holding jig.

At set 706, the camera holding jig and/or the one or more calibration targets are moved towards a predetermined direction for a predetermined distance. In one example, the camera holding jig is moved along a horizontal rail or a vertical rail of the support frame. In another example, the one or more calibration targets are moved according to a desired target image angle and distance. For example, if a desired target image angle is 30° with respect to a reference angle, then the one or more calibration targets may be rotated by 30° by the one or more target support devices. In yet another example, the camera holding jig or the one or more target support devices receive/obtain a moving command signal from a processing unit, wherein the moving command signal comprises information of the predetermined direction and the predetermined distance.

At step 708, a calibration target image is captured and stored in each of the set of AV cameras. In one example, after the calibration target images are captured and stored, the set of AV cameras transmit the captured and stored images to the processing unit for further processing. In another example, the processing unit stores a set of image parameters for each of the captured and stored images, such as an angle or a distance from the calibration target image to each of the set of AV cameras.

At step 710, in each of the set of AV cameras, a total number of the captured and stored images for each of the one or more calibration targets is compared to a predetermined number. If the total number matches the predetermined number, then go to step 712; otherwise go back to step 706. In some embodiments, the predetermined number is determined based on an intrinsic calibration plan for the set of AV cameras.

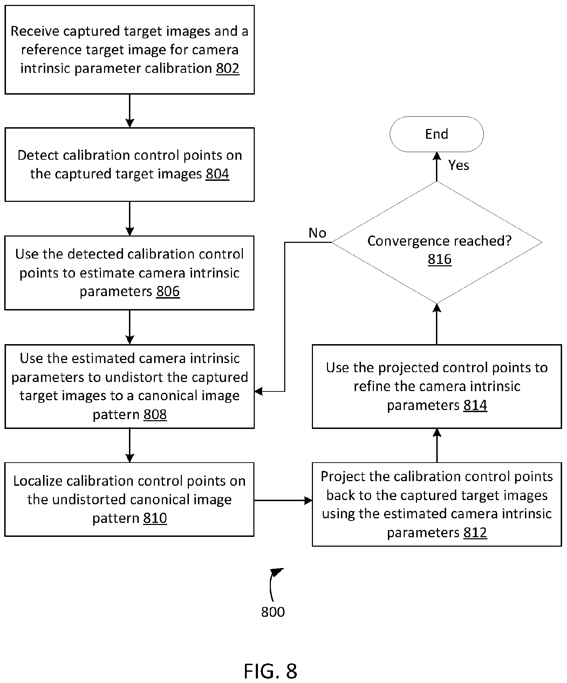

At step 712, an intrinsic camera calibration is performed for each of the set of AV cameras. In some embodiments, the intrinsic camera calibration is performed at the processing unit using the captured and stored calibration target images and a reference calibration target image. Further details about intrinsic calibration are described with reference to FIG. 8 below.

At step 714, the set of AV cameras are mounted on an AV after the intrinsic calibration process is completed. In this way, the intrinsic calibration process is completed before the set of AV cameras are placed on the AV, and the calibration process does not need to place the AV on a conventional rotating platform. Thus, space, time and cost requirements associated with conventional techniques for calibration of AV cameras are significantly reduced.

At step 716, a change of at least one camera intrinsic parameter is verified after the set of AV cameras are mounted on the AV. If a change in at least one camera intrinsic parameter is detected, then go back to step 702; otherwise, stay in step 716 to continuously monitor changes of camera intrinsic parameters. One purpose of performing this step is that once calibrated, camera intrinsic parameters are still subject to drift over long periods of operation. For example, cumulative error may result in changes of camera focal length over time, and these changes may further degrade image quality captured by the set of AV cameras, and in turn impact AV operations. Thus, continuously monitoring changes of camera intrinsic parameters and applying re-calibration when necessary ensures image quality of the AV cameras and maintains AV operations in a safe manner.

FIG. 8 illustrates another example method 800 for calibrating camera intrinsic parameters in an AV, according to an embodiment of the present disclosure. In some embodiments, the method illustrated in FIG. 8 can be used to implement step 712 illustrated in FIG. 7. The operations of method 800 presented below are intended to be illustrative. In some embodiments, method 800 may be accomplished with one or more additional operations not described and/or without one or more of the operations discussed. Additionally, the order in which the operations of method 800 are illustrated in FIG. 8 and described below is not intended to be limiting.

At step 802, a set target images captured by an AV camera and a reference target image are received in a processing unit for camera intrinsic parameter calibration. In some embodiments, the set of captured target images are obtained by moving the AV camera mounted on a camera holding jig and a calibration target, as illustrated in the exemplary method in FIG. 7. In one example, a plurality of AV cameras is mounted on a camera holding jig, and each of the plurality of AV cameras captures a set target images. In another example, the reference target image comprises an undistorted, noise-free target image stored in the processing unit prior to receiving the captured target images.

At step 804, calibration control points are detected on each of the captured target images. Calibration control points may be referred to as specific points on a target image used to locate calibration image patterns. Examples of calibration control points include 4 vertices of a calibration board, corners for square image patterns, centers for circle or ring image patterns, and/or any other types of calibration control points. In one example, the calibration control points are detected using a corner detection operator for square image patterns by taking the differential of a corner score into account with reference to a direction. In another example, the calibration control points are detected using an iterative subpixel localization method with a gradient-based search. In still another example, the calibration control points are detected by first applying a maximally stable extremal regions (MSER) method to extract all regions that can potentially contain calibration patterns for circle or ring image patterns. Then each region containing calibration patterns is fitted using an ellipse fitting method. In some embodiments, the ellipse fitting method comprises fitting an ellipse equation of the form (x-h)²/a²+(y-k)²/b²=1 by finding the values of the parameters h, k, a and b. Next, regions that have the same shape and location may be grouped, and outlier regions that do not have a group may be filtered out. In some embodiments, distances between each region and all other regions are calculated and sorted. An average distance of the 3 nearest neighbors (i.e., the 3 regions with the shortest distances) for a specific region i can be calculated and denoted as di. In one example, a threshold value t is set such that for a specific region i, if di ≥ t, then the region i is considered as an outlier and removed from further analysis. Once regions are fitted, calibration control points may be identified by localizing geographical centers of each fitted region.

At step 806, camera intrinsic parameters are estimated using the detected calibration control points from step 804. In some embodiments, the camera intrinsic parameters comprise focal length, lens optical center, lens radial distortion, lens tangential distortion, and/or any other intrinsic parameters. In one example, the camera intrinsic parameters are estimated by solving a nonlinear minimization problem which minimizes a difference between a projected model of the captured target images and the reference target image. In another example, the Levenberg-Marquardt algorithm is used to solve the nonlinear minimization problem for estimating camera intrinsic parameters.

At step 808, the estimated camera intrinsic parameters at step 806 are used to undistort the captured target images to a canonical image pattern. A canonical image pattern of the captured target images may be referred to as an undistorted pattern of the captured target images. In some embodiments, the captured target images are undistorted using a matrix transform function with the estimated camera intrinsic parameters.

At step 810, calibration control points on the undistorted captured target images obtained in step 808 are localized. In one example, the calibration control points on the undistorted captured target images are localized using a corner detection operator for square image patterns by taking the differential of a corner score into account with reference to a direction. In another example, the calibration control points on the undistorted captured target images are localized using an iterative subpixel localization method with a gradient-based search.

At step 812, the calibration control points localized on the undistorted captured target images are projected back to the captured target images. In some embodiments, the calibration control points on the undistorted captured target images are projected back to the captured target images using a matrix transform function with the camera intrinsic parameters estimated in step 806.

At step 814, the camera intrinsic parameters are refined using the projected calibration control points from step 812. In some embodiments, the camera intrinsic parameters are re-estimated by solving a nonlinear minimization problem which minimizes a difference between the projected captured target images obtained at step 812 and the reference target image. In another example, the Levenberg-Marquardt algorithm is used to solve the nonlinear minimization problem for re-estimating the camera intrinsic parameters.

At step 816, a convergence of the camera intrinsic parameter estimation process is verified. If the convergence is reached, then end the calibration process; if the convergence is not reached, then go back to step 808. In some embodiments, convergence verification is performed using an iterative refinement algorithm. In one example, the convergence is verified by calculating a sample standard deviation of each of the camera intrinsic parameters. If the sample standard deviation of each of the camera intrinsic parameters is less than a predetermined standard deviation threshold value, then the convergence is reached; otherwise the convergence is not reached. In another example, the convergence is verified by calculating a reprojection error defined as a difference between a projected undistorted target image using the current camera intrinsic parameters and the reference target image. If the reprojection error is less than a predetermined reprojection error threshold value, then the convergence is reached; otherwise the convergence is not reached.

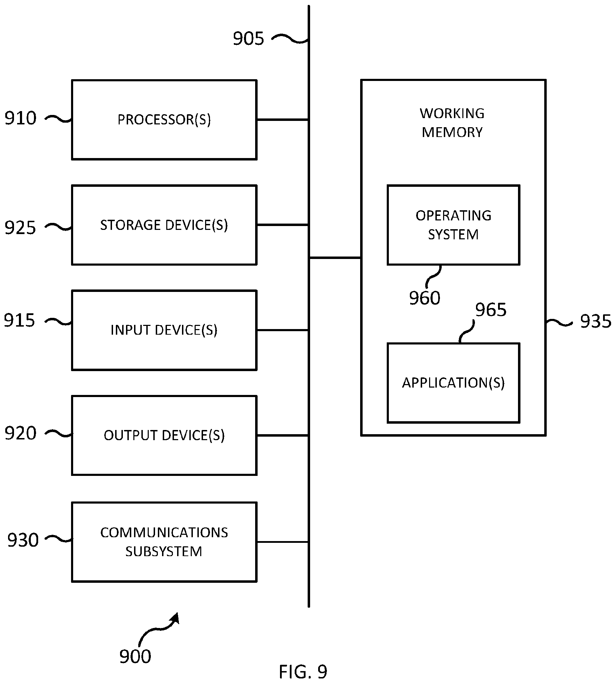

FIG. 9 illustrates a simplified computer system that can be used to implement various embodiments described and illustrated herein. A computer system 900 as illustrated in FIG. 9 may be incorporated into devices such as a portable electronic device, mobile phone, or other device as described herein. FIG. 9 provides a schematic illustration of one embodiment of a computer system 900 that can perform some or all of the steps of the methods provided by various embodiments. It should be noted that FIG. 9 is meant only to provide a generalized illustration of various components, any or all of which may be utilized as appropriate. FIG. 9, therefore, broadly illustrates how individual system elements may be implemented in a relatively separated or relatively more integrated manner.

The computer system 900 is shown comprising hardware elements that can be electrically coupled via a bus 905, or may otherwise be in communication, as appropriate. The hardware elements may include one or more processors 910, including without limitation one or more general-purpose processors and/or one or more special-purpose processors such as digital signal processing chips, graphics acceleration processors, and/or the like; one or more input devices 915, which can include without limitation a mouse, a keyboard, a camera, and/or the like; and one or more output devices 920, which can include without limitation a display device, a printer, and/or the like.

The computer system 900 may further include and/or be in communication with one or more non-transitory storage devices 925, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer system 900 might also include a communications subsystem 930, which can include without limitation a modem, a network card (wireless or wired), an infrared communication device, a wireless communication device, and/or a chipset such as a Bluetooth^{™} device, an 1002.11 device, a WiFi device, a WiMax device, cellular communication facilities, etc., and/or the like. The communications subsystem 930 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 930. In other embodiments, a portable electronic device, e.g. the first electronic device, may be incorporated into the computer system 900, e.g., an electronic device as an input device 915. In some embodiments, the computer system 900 will further comprise a working memory 935, which can include a RAM or ROM device, as described above.

The computer system 900 also can include software elements, shown as being currently located within the working memory 935, including an operating system 960, device drivers, executable libraries, and/or other code, which may comprise computer programs provided by various embodiments, and/or may be designed to implement methods, and/or configure systems, provided by other embodiments, as described herein. Merely by way of example, one or more procedures described with respect to the methods discussed above, such as those described in relation to FIG. 7-8, might be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 925 described above. In some cases, the storage medium might be incorporated within a computer system, such as computer system 900. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by the computer system 900 and/or might take the form of source and/or installable code, which, upon compilation and/or installation on the computer system 900 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 900 to perform methods in accordance with various embodiments of the technology. According to a set of embodiments, some or all of the procedures of such methods are performed by the computer system 900 in response to processor 910 executing one or more sequences of one or more instructions, which might be incorporated into the operating system 960 and/or other code contained in the working memory 935. Such instructions may be read into the working memory 935 from another computer-readable medium, such as one or more of the storage device(s) 925. Merely by way of example, execution of the sequences of instructions contained in the working memory 935 might cause the processor(s) 910 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 900, various computer-readable media might be involved in providing instructions/code to processor(s) 910 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 925. Volatile media include, without limitation, dynamic memory, such as the working memory 935.

Common forms of physical and/or tangible computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 910 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 900.

The communications subsystem 930 and/or components thereof generally will receive signals, and the bus 905 then might carry the signals and/or the data, instructions, etc. carried by the signals to the working memory 935, from which the processor(s) 910 retrieves and executes the instructions. The instructions received by the working memory 935 may optionally be stored on a non-transitory storage device 925 either before or after execution by the processor(s) 910.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

To aid the Patent Office, and any readers of any patent issued on this application in interpreting the claims appended hereto, applicants note that they do not intend any of the appended claims to invoke 3 5 U.S.C. § 112(f) as it exists on the date of filing hereof unless the words "means for" or "step for" are explicitly used in the particular claim.

Also disclosed herein are the following numbered clauses:
1. A method for vehicle camera calibration, the method comprising:
   receiving a first set of imagery data, wherein the first set of imagery data comprises one or more reference images for one or more calibration targets;
   moving at least one of the one or more calibration targets and one or more cameras for a predetermined number of steps, wherein in each of the predetermined number of steps:
      at least one of the one or more calibration targets or the one or more cameras are moved for a predetermined distance towards a predetermined direction, and
      the one or more cameras are configured to capture a second set of imagery data, wherein the second set of imagery data comprises captured images of the one or more calibration targets; and
   calibrating one or more camera intrinsic parameters in the one or more cameras based on the first set of imagery data and the second set of imagery data.
2. The method of clause 1, further comprising moving the one or more cameras by a camera holding jig along a horizontal rail or a vertical rail of a support frame, wherein the horizontal rail and the vertical rail are configured to guide movements of the camera holding jig.
3. The method of clause 1, further comprising localizing one or more calibration pattern control points on the captured images of the one or more calibration targets in the second set of imagery data.
4. The method of clause 3, further comprising localizing the one or more calibration pattern control points using a maximally stable extreme region extractor (MSER).
5. The method of clause 1, further comprising converting the captured images of the one or more calibration targets to a first image format.
6. The method of clause 3, wherein the one or more calibration pattern control points are 4 vertices of a calibration board.
7. The method of clause 1, wherein the one or more calibration targets comprise at least a checkerboard pattern.
8. The method of clause 1, further comprising calibrating the one or more camera intrinsic parameters using an iterative refinement algorithm.
9. The method of clause 1, further comprising recalibrating the one or more camera intrinsic parameters after the one or more cameras are mounted on the vehicle if a change of at least one camera intrinsic parameter is detected.
10. The method of clause 1, wherein the one or more camera intrinsic parameters comprise focal length, lens optical center, lens radial distortion, and lens tangential distortion.
11. A system configured for vehicle camera calibration, the system comprising:
   one or more hardware processors configured by machine-readable instructions to:
   receive a first set of imagery data, wherein the first set of imagery data comprises one or more reference images for one or more calibration targets;
   move at least one of the one or more calibration targets and one or more cameras for a predetermined number of steps, wherein in each of the predetermined number of steps:
      at least one of the one or more calibration targets or the one or more cameras are moved for a predetermined distance towards a predetermined direction, and
      the one or more cameras are configured to capture a second set of imagery data, wherein the second set of imagery data comprises captured images of the one or more calibration targets; and
   calibrate one or more camera intrinsic parameters in the one or more cameras based on the first set of imagery data and the second set of imagery data.
12. The system of clause 11, wherein the one or more hardware processors are further configured by machine-readable instructions to localize one or more calibration pattern control points on the captured images of the one or more calibration targets in the second set of imagery data using an ellipse fitting function.
13. The system of clause 12, wherein the one or more hardware processors are further configured by machine-readable instructions to localize the one or more calibration pattern control points using an iterative subpixel localization method with a gradient-based search.
14. The system of clause 12, wherein the one or more hardware processors are further configured by machine-readable instructions to localize the one or more calibration pattern control points using a nearest neighbors function.
15. The system of clause 12, wherein the one or more calibration pattern control points are corners of square image patterns.
16. The system of clause 12, wherein the one or more calibration pattern control points are centers of circle image patterns.
17. The system of clause 12, wherein the one or more calibration pattern control points are centers of ring image patterns.
18. The system of clause 11, wherein the one or more calibration targets comprise at least an ArUco pattern.
19. The system of clause 11, wherein the one or more calibration targets comprise at least a ring pattern.
20. A non-transient computer-readable storage medium having instructions embodied thereon, the instructions being executable by one or more processors to perform a method for vehicle camera calibration, the method comprising:
   receiving a first set of imagery data, wherein the first set of imagery data comprises one or more reference images for one or more calibration targets;
   moving at least one of the one or more calibration targets and one or more cameras for a predetermined number of steps, wherein in each of the predetermined number of steps:
      at least one of the one or more calibration targets or the one or more cameras are moved for a predetermined distance towards a predetermined direction, and
      the one or more cameras are configured to capture a second set of imagery data, wherein the second set of imagery data comprises captured images of the one or more calibration targets;
   calibrating one or more camera intrinsic parameters in the one or more cameras based on the first set of imagery data and the second set of imagery data;
   mounting the one or more cameras on a vehicle; and
   recalibrating the one or more camera intrinsic parameters after the one or more cameras are mounted on the vehicle if a change of at least one camera intrinsic parameter is detected.

## Claims

1. A method for vehicle camera calibration, the method comprising:
receiving a first set of imagery data, wherein the first set of imagery data comprises one or more reference images for one or more calibration targets;
moving at least one of the one or more calibration targets and one or more cameras for a predetermined number of steps, wherein in each of the predetermined number of steps:
at least one of the one or more calibration targets or the one or more cameras are moved for a predetermined distance towards a predetermined direction, and
the one or more cameras are configured to capture a second set of imagery data, wherein the second set of imagery data comprises captured images of the one or more calibration targets; and
calibrating one or more camera intrinsic parameters in the one or more cameras based on the first set of imagery data and the second set of imagery data.

2. The method of claim 1, further comprising moving the one or more cameras by a camera holding jig along a horizontal rail or a vertical rail of a support frame, wherein the horizontal rail and the vertical rail are configured to guide movements of the camera holding jig.

3. The method of claim 1 or 2, further comprising localizing one or more calibration pattern control points on the captured images of the one or more calibration targets in the second set of imagery data.

4. The method of claim 3, further comprising localizing the one or more calibration pattern control points using a maximally stable extreme region extractor (MSER).

5. The method of any preceding claim, further comprising converting the captured images of the one or more calibration targets to a first image format.

6. The method of claim 3 or 4, wherein the one or more calibration pattern control points are 4 vertices of a calibration board.

7. The method of any preceding claim, wherein the one or more calibration targets comprise at least a checkerboard pattern, at least an ArUco pattern, or at least a ring pattern.

8. The method of any preceding claim, further comprising calibrating the one or more camera intrinsic parameters using an iterative refinement algorithm.

9. The method of any preceding claim, further comprising recalibrating the one or more camera intrinsic parameters after the one or more cameras are mounted on the vehicle if a change of at least one camera intrinsic parameter is detected.

10. The method of any preceding claim, wherein the one or more camera intrinsic parameters comprise focal length, lens optical center, lens radial distortion, and lens tangential distortion.

11. The method of claim 3 or 4, further comprising localizing the one or more calibration pattern control points on the captured images of the one or more calibration targets in the second set of imagery data using an ellipse fitting function.

12. The method of claim 11, further comprising localizing the one or more calibration pattern control points using either an iterative subpixel localization method with a gradient-based search, or a nearest neighbors function.

13. The method of claim 11 or 12, wherein one or more calibration pattern control points are corners of square image patterns, centers of circle image patterns or centers of ring image patterns.

14. A system configured for vehicle camera calibration, the system comprising:
one or more hardware processors configured by machine-readable instructions to perform the method of any preceding claim

15. A non-transient computer-readable storage medium having instructions embodied thereon, the instructions being executable by one or more processors to perform a method for vehicle camera calibration, the method comprising the method of any of claims 1 to 13.
